(19)

Europäisches Patentamt

European Patent Office

Office européen des brevets

(11) **EP 4 697 396 A1**

(12) **EUROPEAN PATENT APPLICATION**
published in accordance with Art. 153(4) EPC

(43) Date of publication:
**18.02.2026 Bulletin 2026/08**

(21) Application number: **24913679.7**

(22) Date of filing: **27.12.2024**

(51) International Patent Classification (IPC):
*H01M 4/13* (2010.01)     *H01M 4/62* (2006.01)
*H01M 10/42* (2006.01)     *H01M 10/052* (2010.01)
*H01M 10/0569* (2010.01)

(52) Cooperative Patent Classification (CPC):
**H01M 4/13; H01M 4/62; H01M 10/052;
H01M 10/0569; H01M 10/42**

(86) International application number:
**PCT/KR2024/021283**

(87) International publication number:
**WO 2025/143874 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023 KR 20230194499**

(71) Applicant: **LG Energy Solution, Ltd.
Seoul 07335 (KR)**

(72) Inventors:
• **KO, Minjin
Daejeon 34122 (KR)**

• **KWON, Yohan
Daejeon 34122 (KR)**
• **LEE, Jaewook
Daejeon 34122 (KR)**
• **PARK, Seungwon
Daejeon 34122 (KR)**
• **MIN, Jiwon
Daejeon 34122 (KR)**
• **PARK, Junhyoung
Daejeon 34122 (KR)**
• **MIN, Kyeongjun
Daejeon 34122 (KR)**

(74) Representative: **Hoffmann Eitle
Patent- und Rechtsanwälte PartmbB
Arabellastraße 30
81925 München (DE)**

(54) **ELECTRODE SLURRY, ELECTRODE COMPRISING SAME, LITHIUM SECONDARY BATTERY, AND BATTERY PACK**

(57)     The present specification relates to an electrode slurry including an electrode active material, a conductive material, a binder, a solvent for forming a slurry, and a flame-retardant material, in which the flame-retardant material has a solubility of less than 10 mg/cc in a carbonate-based solvent at 20°C and includes a specific type of compound, an electrode including the same, a lithium secondary battery, and a battery pack. The electrode according to the exemplary embodiment can ensure battery characteristics while preventing thermal runaway.

[Figure 1]

**Description**

[Technical Field]

The present application relates to an electrode slurry, an electrode including the same, a lithium secondary battery, and a battery pack.

This application claims priority to and the benefit of Korean Patent Application Nos. 10-2023-0194499 and 10-2024-0197948 filed in the Korean Intellectual Property Office on December 28, 2023 and December 27, 2024, the entire contents of which are incorporated herein by reference.

[Background Art]

A secondary battery is a battery that can be recharged and reused even after being discharged. The secondary battery can be used as an energy source for small devices, such as mobile phones, tablet PCs, and vacuum cleaners, as well as an energy source for medium and large devices, such as an energy storage system (ESS) for personal mobilities, automobiles, and smart grids.

In order to be utilized in such a wide range of applications, secondary batteries are required to have high performance. As a result of extensive research and development, lithium secondary batteries, which provide high energy density, ease of processing, and applicability in various electronic devices, have gained significant attention.

However, lithium secondary batteries are not only vulnerable to external impacts but also prone to internal deterioration, which can result in frequent ignition. These problems can cause significant damage by causing heat transfer among multiple batteries/ cells, resulting in thermal runaway in assembly units such as battery modules or battery packs connected in series and/or parallel.

Specifically, when the internal temperature of a lithium secondary battery exceeds a certain temperature, the pressure inside the cell may rise as an electrolyte vaporizes, potentially causing leakage of the electrolyte from the cell or damage to the separator. When flammable gaseous substances are ignited or the separator is damaged due to the vaporization of the electrolyte, an internal short circuit may be caused, leading to heating of adjacent cells. This may result in undesirable continuous or chain-like exothermic reactions, which progress to ignition, causing the fire to spread throughout the battery pack. However, lithium ions have high reactivity to water, so even attempting to extinguish the fire with water may cause the fire to spread further.

To solve the above problems, research is being conducted on materials that can block or suppress, at an early stage, the occurrence of undesirable continuous or chain-like exothermic reactions in terms of electrode slurry.

[Detailed Description of the Invention]

[Technical Problem]

The present inventors have completed an electrode slurry including a specific type of flame-retardant material with a low solubility in a specific solvent, without having a separate layer, thereby maintaining the intended battery characteristics, blocking heat transfer between cells and thermal runaway in advance, and simultaneously preventing leakage of the flame-retardant material when configured into a battery in the future, ensuring that it does not limit a lithium-ion migration rate during charging and discharging.

Specifically, the present specification is intended to provide an electrode slurry including a flame-retardant material, which has a solubility of less than 10 mg/cc in a carbonate-based solvent at 20°C and is a straight-chain type or branched-chain type polyphosphate-based compound, an electrode including the same, a lithium secondary battery, and a battery pack.

[Technical Solution]

An exemplary embodiment of the present specification includes an electrode slurry including an electrode active material, a conductive material, a binder, a solvent for forming a slurry, and a flame-retardant material, in which the flame-retardant material has a solubility of less than 10 mg/cc in a carbonate-based solvent at 20°C and comprises a straight-chain type or branched-chain type polyphosphate-based compound.

Another exemplary embodiment of the present specification provides an electrode including an electrode current collector layer; and an electrode active material layer having the electrode slurry applied on one surface or both surfaces of the electrode current collector layer.

Still another embodiment of the present specification provides a lithium secondary battery including a first electrode; a second electrode; a separator interposed between the first electrode and the second electrode; and an electrolyte, in which at least one of the first electrode and the second electrode is the electrode described above.

Yet another exemplary embodiment of the present specification provides a battery pack including the above-described lithium secondary battery as a unit cell.

[Advantageous Effects]

An electrode according to an exemplary embodiment of the present invention can maintain characteristics, such as long life and low cell resistance, prevent additional thermal runaway or delay the time required for thermal runaway, and at the same time prevent leakage of a flame-retardant material in the future in terms of the battery, thereby maintaining the viscosity of the electrolyte below a certain level even during repeated charging and discharging while maintaining the lithium-ion migration rate. In addition, compared to flame-retardant electrolytes, the electrode according to the present invention is cost-effective, easier to apply to processes, and effective in suppressing side reactions.

[Brief Description of Drawings]

FIG. 1 is a schematic view of an electrode according to an exemplary embodiment of the present invention.
FIGS. 2 and 3 are schematic views of a lithium secondary battery according to an exemplary embodiment of the present invention.
FIG. 4 is a schematic view of a battery pack according to an exemplary embodiment of the present invention.
FIG. 5 is a schematic view of a moving means including the battery pack according to an exemplary embodiment of the present invention.

<Explanation of Reference Numerals and Symbols>

1: electrode current collector layer
2: electrode active material layer
3: flame-retardant material
4: electrode slurry
10: electrode
10-1: first electrode
10-2: second electrode
11: separator
20: lithium secondary battery (cross-section)
100: lithium secondary battery
201: housing
300: battery pack
400: moving means

[Best Mode]

Before describing the present invention, some terms are first defined.

In the present specification, 'p to q' may refer to a range of 'p or more and q or less'.

In the present specification, when a part is described as 'including' or 'having' a certain component, unless otherwise specified, it may mean that the part may further include other components rather than excluding other components.

In the present specification, singular expressions include plural expressions, unless otherwise specified.

Unless otherwise defined, all terms used herein, including technical and scientific terms, have the same meanings as commonly understood by one skilled in the art to which the present invention pertains. Terms, such as those defined in commonly used dictionaries, should be interpreted as having a meaning consistent with their meaning in the context of the relevant art and should not be interpreted in an idealized or overly formal sense unless explicitly so defined in the present application.

Hereinafter, exemplary embodiments of the present invention will be described in detail with reference to the drawings so that one skilled in the art can readily implement the present invention. However, the present invention may be implemented in various different forms, and is not limited to the following descriptions.

**<Electrode Slurry>**

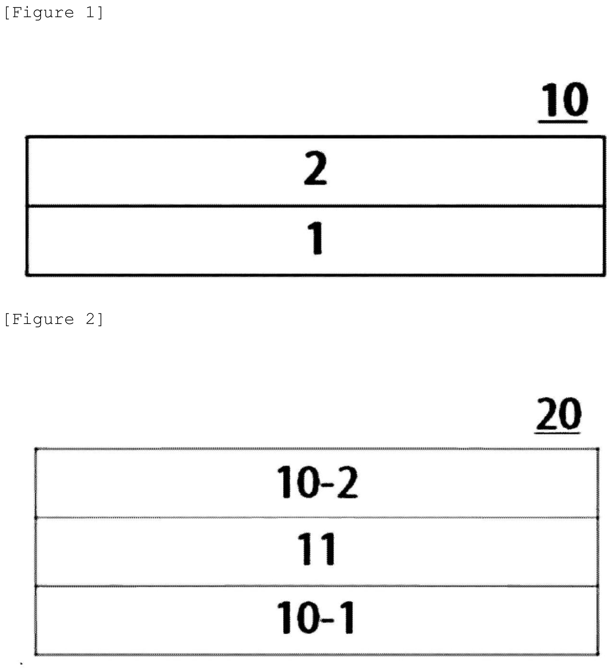

Below, an electrode slurry 4 included in an electrode active material layer 2 of FIG. 1 will be described.

An electrode slurry according to an exemplary embodiment of the present specification includes a flame-retardant material, and the flame-retardant material has a solubility of less than 10 mg/cc in a carbonate-based solvent at 20°C and is a straight-chain type or branched-chain type polyphosphate-based compound.

The flame-retardant material has a low solubility in a carbonate-based solvent, thereby ensuring low combustibility, making self-combustion of the electrode by oxygen or combustion with other elements of the battery in the future difficult, preventing additional thermal runaway or delaying the time required for thermal runaway, and preventing leakage of the flame-retardant material in the future in terms of the battery, which in turn prevents an increase in the viscosity of the electrolyte and consequently prevents a decrease in the lithium-ion migration rate during repeated charging and discharging.

The term 'linear or straight-chain type' refers to a structure in which atoms are connected in a single row and the connections between atoms are formed by single, double, or higher-order bonds in a consecutive manner.

The term 'branched-chain type' refers to a structure in which some atoms in the straight-chain type structure deviate from the main chain and are connected in other directions.

According to an exemplary embodiment of the present specification, the straight-chain type or branched-chain type polyphosphate-based compound may include at least one of ammonium and halogen.

According to an exemplary embodiment of the present specification, the electrode slurry may further include a flame-retardant additive, in addition to the flame-retardant material.

According to an exemplary embodiment of the present specification, a content of the flame-retardant material may be 1 part by weight or more and 20 parts by weight or less relative to 100 parts by weight of the entire electrode slurry.

When the flame-retardant material falls within the specific range, the prevention of thermal runaway can be improved.

According to an exemplary embodiment of the present specification, the conductive material may be at least one of a planar conductive material, a linear conductive material, and a point-like conductive material.

According to an exemplary embodiment of the present specification, the binder may be an aqueous binder or a non-aqueous binder.

According to an exemplary embodiment of the present specification, a binding force of the electrode slurry may exceed 15 gf/20mm.

When an electrode slurry satisfying the specific range of binding force is used, detachment at an electrode edge portion can be prevented during a future punching process, and structural integrity can be maintained during cell operations despite electrode swelling.

In the present specification, the binding force of the electrode slurry may be evaluated by attaching an electrode plate to one side of a (double-sided) adhesive tape, attaching a 1 cm-thick glass to a back side of the adhesive tape, and then using a UTM (Instron 3345) to position the adhesive tape and the electrode plate at a 180° angle on the peeling surface.

**<Electrode>**

Below, an electrode 10 of FIG. 1 will be described.

An exemplary embodiment of the present specification provides an electrode including an electrode current collector layer 1; and an electrode active material layer 2 having an electrode slurry 4 applied to one surface or both surfaces of the electrode current collector layer. That is, the electrode has a feature that a flame-retardant material 3 is included in the electrode active material layer 2 including the electrode slurry.

The electrode of the exemplary embodiment includes the electrode slurry as it is, and thus, factors that may cause thermal runaway with components of the lithium secondary battery can be blocked in advance.

**<Lithium Secondary Battery>**

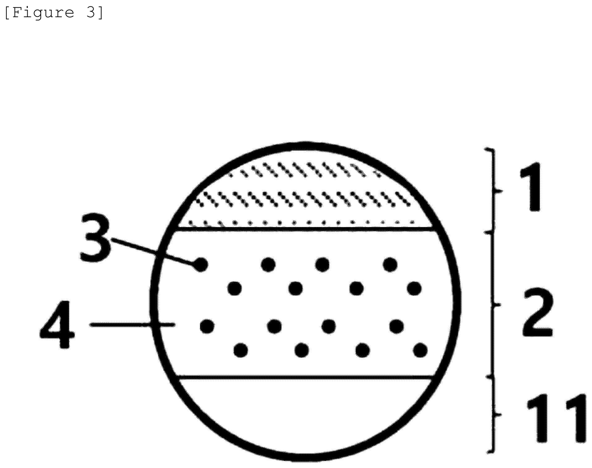

Below, a lithium secondary battery of FIGS. 2 and 3 will be described.

According to an exemplary embodiment of the present specification, a lithium secondary battery includes a first electrode 10-1; a second electrode 10-2; a separator 11 interposed therebetween; and an electrolyte, in which one of the first electrode 10-1 and the second electrode 10-2 is the electrode 10 described above.

The lithium secondary battery of the exemplary embodiment includes the electrode described above, and thus, factors that may cause thermal runaway with components of the lithium secondary battery can be blocked in advance.

Referring to FIG. 2, the separator 11 is interposed between the first electrode 10-1 and the second electrode 10-2, and at least one of the first electrode 10-1 and the second electrode 10-2 may be the electrode described above.

Specifically, one surface of the separator 11 is in contact with one surface of the electrode active material layer 2, and the electrode current collector layer 1 may be provided on a surface of the electrode active material layer 2 opposite to the surface in contact with the separator 11.

In the present specification, the first electrode may be a negative electrode and the second electrode may be a positive electrode, or the first electrode may be a positive electrode and the second electrode may be a negative electrode.

Accordingly, when the above-described electrode is a negative electrode, the electrode current collector layer may be referred to as a negative electrode current collector layer, and the electrode active material layer may be referred to as a negative electrode active material layer. The specific details are as follows.

In the present specification, the negative electrode current collector is not particularly limited as long as it has conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used.

In the present specification, the negative electrode current collector may typically have a thickness of 1 μm to 100 μm, and fine irregularities may be formed on a surface of the negative electrode current collector to increase the adhesive strength of the negative electrode active material. In addition, the negative electrode current collector may be used in various forms, such as a film, a sheet, a foil, a net, a porous body, a foamed body, a non-woven body, and the like.

In an exemplary embodiment of the present specification, the negative electrode active material layer may include at least one of a silicon-based active material and a carbon-based active material.

In an exemplary embodiment of the present specification, the negative electrode active material layer may include a carbon-based active material.

The carbon-based active material can prevent expansion caused by repeated charging and discharging in the negative electrode or lithium secondary battery of the present invention, thereby contributing to excellent cycle characteristics or improved battery life performance.

In an exemplary embodiment of the present specification, the negative electrode active material layer may include a silicon-based active material.

In general, silicon-based active materials are known to have a capacity that is 10 times or higher than that of carbon-based active materials. Accordingly, when a silicon-based active material is applied to a negative electrode, an electrode with a high level of energy density can be implemented even with a thin thickness.

In an exemplary embodiment of the present specification, the silicon-based active material may include one or more selected from the group consisting of $SiO_x$ (x=0), $SiO_x$ (0 < x < 2), a Si/C composite, and a Si alloy.

Note that since $SiO_2$ may not react with lithium ions and thus not store lithium, x is preferably within the above range. The silicon-based active material may be Si or a Si/C composite composed of a composite of Si and C.

As necessary, the silicon-based active material may refer to a single material or a mixed material of two or more combined materials.

In an exemplary embodiment of the present specification, there is provided a negative electrode composition in which the silicon-based active material includes one or more selected from the group consisting of $SiO_x$ (x=0) and $SiO_x$ (0 < x < 2), and the $SiO_x$ (x=0) is included in an amount of 70 parts by weight or more based on 100 parts by weight of the silicon-based active material.

In an exemplary embodiment of the present specification, the silicon-based active material may include the $SiO_x$ (x=0) in an amount of 70 parts by weight or more, preferably 80 parts by weight or more, and more preferably 90 parts by weight or more and 100 parts by weight or less, preferably 99 parts by weight or less, and more preferably 95 parts by weight or less based on 100 parts by weight of the silicon-based active material.

The silicon-based active material according to the present specification includes the $SiO_x$ (x=0) in an amount of 70 parts by weight or more based on 100 parts by weight of the silicon-based active material, and compared to silicon-based active materials that mainly use $SiO_x$ (0 < x < 2) series compounds, the theoretical capacity of the silicon-based active material in the present specification can be achieved at a much higher level.

In an exemplary embodiment of the present specification, pure silicon (Si) may be used as the silicon-based active material. The use of pure silicon (Si) as the silicon-based active material may mean that, based on 100 parts by weight of the total silicon-based active material as described above, pure Si particles ($SiO_x$ (x=0)) not bonded to other particles or elements are included within the above range.

In an exemplary embodiment of the present specification, the negative electrode active material layer may further include a negative electrode conductive material and a negative electrode binder.

The negative conductive material is used to impart conductivity to the electrode, and can be used without particular limitation as long as it has electronic conductivity without causing a chemical change in a battery. However, the negative electrode conductive material is applied to the negative electrode and has a completely different configuration from a positive electrode conductive material that is applied to the positive electrode. That is, the negative electrode conductive material serves to support a contact point between silicon-based active materials, which undergo a large volume expansion of the electrode due to charging and discharging, whereas the positive electrode conductive material serves to impart partial conductivity while playing a buffer role as a cushioning role when rolled, so the configurations and roles of the negative electrode conductive material and the positive electrode conductive material are different from each other.

Specific examples of the negative conductive material may include one or more selected from the group consisting of a point-like conductive material, a planar conductive material, and a linear conductive material.

Specifically, the point-like conductive material may be at least one selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black and/or artificial graphite in terms of implementing high conductivity and excellent dispersibility.

The planar conductive material may improve conductivity by increasing planar contact between silicon particles in the negative electrode, and at the same time, suppress disconnection of conductive paths due to volume expansion. The planar conductive material may be expressed as a plate-like conductive material or a bulk-type conductive material. Examples of the planar conductive material may include at least one selected from the group consisting of plate-like graphite, graphene, graphene oxide, and graphite flakes and may be preferably plate-like graphite.

The linear conductive material may be carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet in the shape of a cylinder with a nanoscale diameter and has an $sp^2$ bonding structure. In this case, the characteristics of a conductive material or a semiconductive material may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present specification, there is provided the negative electrode composition in which the negative electrode conductive material is included in an amount of 0.1 part by weight or more and 40 parts by weight or less based on 100 parts by weight of the negative electrode composition.

In another exemplary embodiment, the negative electrode conductive material may be included in an amount of 0.1 part by weight or more and 40 parts by weight or less, preferably 0.2 part by weight or more and 30 parts by weight or less, more preferably 0.4 part by weight or more and 25 parts by weight or less, and most preferably 0.4 part by weight or more and 10 parts by weight or less based on 100 parts by weight of the negative electrode composition.

The negative electrode binder serves to improve the adhesion between negative electrode active material particles and the adhesive strength between the negative electrode active material and the negative electrode current collector and may be classified into an aqueous binder and a non-aqueous binder (organic binder) depending on its solubility in an aqueous solvent such as water. Specific examples of the negative electrode binder may include a carboxymethyl cellulose (CMC)-based binder, a styrene butadiene rubber (SBR)-based binder, a polyacrylic acid (PAA)-based binder, a polyacrylamide (PAM)-based binder, a polyacrylonitrile (PAN)-based binder, polyvinyl alcohol (PVA), polyacrylic acid (PAA), polyethylene glycol (PEG), various copolymers derived therefrom, or a mixture of two or more of these.

In an exemplary embodiment of the present specification, there is provided the negative electrode composition in which a weight average molecular weight of the negative electrode binder is 100,000 g/mol or greater and 1,000,000 g/mol or less.

In the present specification, the weight average molecular weight (Mw) and the number average molecular weight (Mn) are polystyrene-converted molecular weights measured by gel permeation chromatography (GPC) using, as standard materials, monodisperse polystyrene polymers (standard samples) of various degrees of polymerization commercially available for molecular weight measurement. In the present specification, the molecular weight refers to a weight average molecular weight unless particularly described otherwise.

When the weight average molecular weight falls within the above range, the mechanical strength is excellent, and the interaction between molecules is high, resulting in excellent electrode binding force. In addition, when the above range is satisfied, the viscosity of the binder can be set within an appropriate range, leading to excellent coatability of an electrode when a negative electrode is manufactured using the same.

In an exemplary embodiment of the present specification, there is provided the negative electrode composition in which the negative electrode binder is included in an amount of 1 part by weight or more and 20 parts by weight or less based on 100 parts by weight of the negative electrode composition.

In an exemplary embodiment of the present specification, the negative electrode binder may be included in an amount of 20 parts by weight or less, preferably 15 parts by weight or less and 1 part by weight or more, 5 parts by weight or more, or 10 parts by weight or more based on 100 parts by weight of the negative electrode composition.

As described above, when including a negative electrode active material, a negative electrode conductive material, and a negative electrode binder, it may be referred to as a negative electrode composition.

In some cases, a solvent may be added to the negative electrode composition, which may be referred to as a negative electrode slurry. The solvent used herein may be referred to as a solvent for negative electrode slurry formation.

Examples of the solvent for negative electrode slurry formation may include, but are not limited to, N-methyl-2-pyrrolidone (NMP), water, or the like.

In the present specification, the negative electrode refers to an electrode that has undergone a series of electrode processes, including a coating step of applying a negative electrode slurry to at least one surface of a negative electrode current collector, a pressing step of pressing the current collector to a certain thickness by roll pressing, and a slitting step of cutting the pressed current collector to fit the electrode specifications.

In an exemplary embodiment of the present specification, the negative electrode can form a negative electrode for a lithium secondary battery by coating a negative electrode slurry including the negative electrode composition to one surface or both surfaces of a current collector.

In an exemplary embodiment of the present specification, a solid content of the negative electrode slurry may fall within a range of 5% or more and 40% or less.

In another exemplary embodiment, the solid content of the negative electrode slurry may fall within a range of 5% or more and 40% or less, preferably 7% or more and 35% or less, and more preferably 10% or more and 30% or less.

The solid content of the negative electrode slurry may refer to a content of the negative electrode composition included in the negative electrode slurry, and may refer to a content of the negative electrode composition based on 100 parts by weight of the negative electrode slurry.

When the solid content of the negative electrode slurry falls within the specified range, the viscosity is appropriate during formation of the negative electrode active material layer, so that particle agglomeration of the negative electrode composition is minimized to efficiently form the negative electrode active material layer.

For other details regarding the negative electrode, information known in the art is applied.

Accordingly, when the above-described electrode is a positive electrode, the electrode current collector layer may be referred to as a positive electrode current collector layer, and the electrode active material layer may be referred to as a positive electrode active material layer. The specific details are as follows.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 $\mu$m to 500 $\mu$m, and fine irregularities may be formed on a surface of the positive electrode current collector layer to increase the adhesive strength of the positive electrode active material. For example, the positive electrode current collector may be used in various forms, such as a film, a sheet, a foil, a net, a porous body, a foamed body, a non-woven body, and the like.

In an exemplary embodiment of the present specification, a thickness of the positive electrode current collector layer may be 1 $\mu$m or greater and 100 $\mu$m or less, and a thickness of the positive electrode active material layer may be 20 $\mu$m or greater and 500 $\mu$m or less. However, the thickness may vary depending on the type and purpose of the negative electrode used and is not limited thereto.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$, and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn, and Ta, and satisfies $0.01 \leq c3 \leq 0.1$) or $Li_2Mn_3MO_8$ (where M is at least one selected from the group consisting of Fe, Co, Ni, Cu, and Zn); $LiMn_2O_4$ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above. When the positive electrode active material, the positive electrode conductive material, and the positive electrode binder are included, it may be referred to as a positive electrode composition, and when the positive electrode composition further includes a solvent for formation of a positive electrode slurry, it can be referred to as a positive electrode slurry.

The positive electrode conductive material is used to impart conductivity to the electrode, and can be used without particular limitation as long as it has electronic conductivity without causing a chemical change in a battery to be configured. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

The positive electrode binder serves to improve the adhesion between positive electrode active material particles and the adhesive strength between the positive electrode active material and the positive electrode current collector. Specific examples of the positive electrode binder include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers derived therefrom, or a mixture of two or more of these.

The solvent, when referring to a solvent for formation of a positive electrode slurry, may include, but is not limited to, N-methyl-2-pyrrolidone (NMP), water, or the like.

In the present specification, the positive electrode refers to an electrode that has undergone a series of electrode processes, including a coating step of applying a positive electrode composition to at least one surface of a positive electrode current collector, a pressing step of pressing the current collector to a certain thickness by roll pressing, and a slitting step of cutting the pressed current collector to fit the electrode specifications.

For other details regarding the positive electrode, information known in the art is applied.

According to an exemplary embodiment of the present specification, the electrolyte may include a solvent; a salt; and an additive.

According to an exemplary embodiment of the present specification, the electrolyte may include a carbonate-based solvent.

In the present specification, specific examples of the carbonate-based solvent include, but are not limited to, propylene carbonate, ethylene carbonate, butylene carbonate, dimethyl carbonate, diethyl carbonate, and difluoroethylene carbonate.

In particular, the carbonate-based solvent may be a carbonate-based organic solvent. Among the carbonate-based organic solvents, ethylene carbonate and propylene carbonate, which are cyclic carbonates, may be preferably used as they are high-viscosity organic solvents with high permittivity and thus easily dissociate lithium salts. In addition, when low-viscosity, low-permittivity linear carbonate, such as dimethyl carbonate and diethyl carbonate, is mixed and used in an appropriate ratio with the cyclic carbonate, an electrolyte with high electrical conductivity can be produced, and thus can be more preferably used.

In the present specification, in addition to carbonate-based solvents, aprotic organic solvents, such as gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, and ethyl propionate can be used.

In the present specification, the carbonate-based solvent may further include a metal salt, and a lithium salt may be used. The lithium salt is a material that is readily soluble in the non-aqueous electrolyte, and for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

One or more additives, for example, pyridine, triethylphosphite, triethanolamine, cyclic ether, ethylenediamine, n-glyme, hexaphosphoric triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

In the present specification, the separator separates the negative electrode and the positive electrode and provides a migration passage for lithium ions, and can be used without particular limitation as long as the separator is typically used as a separator in a lithium secondary battery. In particular, a separator having high moisture-retention ability for an electrolyte as well as a low resistance to migration of electrolyte ions is preferable. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In the present specification, a lithium secondary battery may be a concept including a battery can accommodating an electrode assembly including a positive electrode, a negative electrode, and a separator, and an electrolyte.

**<Battery Pack>**

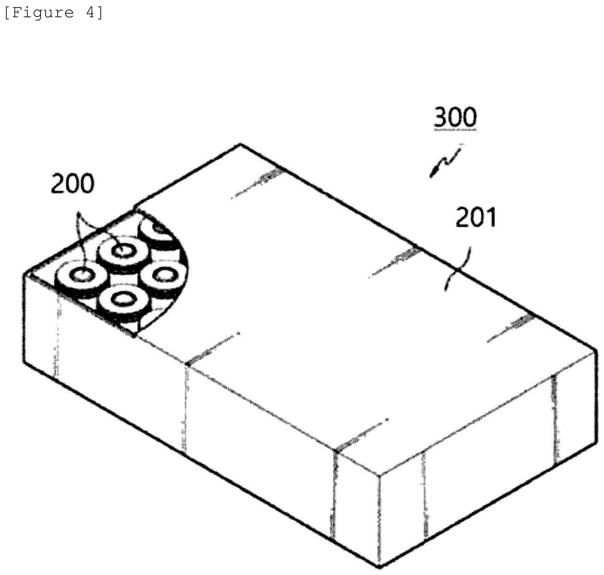

A battery pack of the present specification refers to FIG. 4.

An exemplary embodiment of the present specification provides a battery module and/or a battery pack 300 including the lithium secondary battery 200 as a unit cell.

Since the battery module and/or battery pack includes the lithium secondary battery 200, the contents of the above-described lithium secondary battery can be applied as is.

In the present specification, the battery pack 300 may have a structure in which the lithium secondary battery 200 is included in a pack housing 201. However, the lithium secondary battery 200 may be replaced with a coin type, a pouch type, a square type, or the like, as needed, in addition to the shown cylindrical type.

In some cases, the battery pack of the present specification may include one or more battery module units.

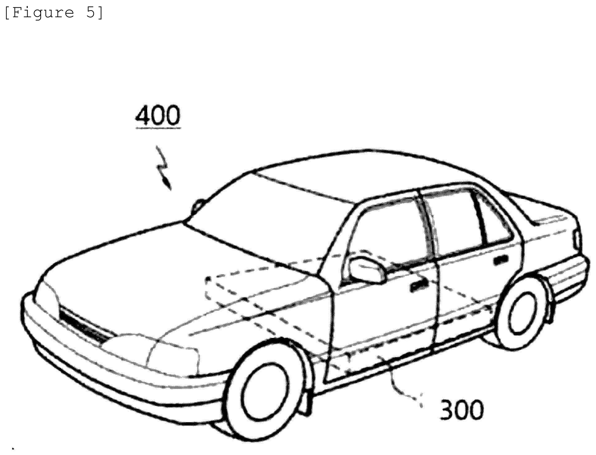

According to FIG. 5, the battery pack 300 can be used as a power source for a medium- to large-sized device selected from the group consisting of a moving means 400 such as an electric vehicle, a hybrid electric vehicle, a plug-in hybrid electric vehicle, and an electric power storage system (EES), as needed.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of the claims included herein.

**Examples Manufacture of Electrode**

**Example 1**

**(1) Preparation of Negative Electrode**

Graphite and Si/C (average particle diameter ($D_{50}$) 8 $\mu$m) serving as a negative electrode active material, the first and second conductive materials serving as a conductive material, polyacrylamide serving as a binder, and ammonium polyphosphate as a flame-retardant material were prepared in a weight ratio of 73:13:1.6:0.4:5:7 and added to a solvent (distilled water), resulting in preparation of a negative electrode slurry (solid concentration 35 wt%). Here, the first conductive material was plate-like graphite (specific surface area 17 $m^2$/g, average particle diameter ($D_{50}$): 3.5 $\mu$m), and the second conductive material was single-walled carbon nanotubes (SWCNTs). As a mixing method, the first conductive material, the second conductive material, the binder, and water were dispersed at 2,500 rpm for 30 minutes using a HOMO MIXER (PRIMIX), and then the negative electrode active material was added and dispersed at 2,500 rpm for 30 minutes, resulting in preparation of a negative electrode slurry.

Then, the negative electrode slurry was coated on both surfaces of the negative electrode current collector (copper (Cu) thin film, thickness: 8 $\mu$m) in a loading amount of 3.75 mAh/$cm^2$ and dried in a vacuum oven at 130°C for 10 hours, which was then roll-pressed to prepare a negative electrode.

**(2) Preparation of Positive Electrode**

A positive electrode active material ($LiNi_6Co_{0.9}Mn_{3.1}O_2$), a positive electrode conductive material (multi-walled carbon nanotubes, MWCNT), and a binder (PVdF, KF9700) were added to a solvent (N-methyl pyrrolidone, NMP) in a weight ratio of 97.3:1.3:1.4 to prepare a positive electrode slurry (solid concentration 67 wt%). The positive electrode slurry was coated on the positive electrode current collector (aluminum (Al) thin film, thickness: 12 $\mu$m) in a loading amount of 3.6 mAh/$cm^2$ and dried (which were the same as the drying method of the negative electrode), which was then roll-pressed to prepare a positive electrode where the positive electrode active material layer was formed on the positive electrode current collector.

**(3) Preparation of Lithium Secondary Battery**

An electrode assembly was prepared by interposing a compression-resistant thin film separator (PE 15 $\mu$m) with a ceramic coating of 4 $\mu$m/4 $\mu$m between the negative electrode and the positive electrode. After positioning the electrode assembly inside a battery case, an electrolyte (an electrolyte solution in which 1.2 M $LiPF_6$ was dissolved in a mixed solution of ethylene carbonate (EC): methyl ethyl carbonate (EMC)=80:20 (volume ratio)) was injected into the case to prepare a lithium secondary battery.

**Example 2**

A lithium secondary battery was prepared in the same manner as in Example 1, except that ammonium polyphosphate was excluded in the preparation of the negative electrode and 5 parts by weight of ammonium polyphosphate was added in the preparation of the positive electrode.

**Comparative Example 1**

A lithium secondary battery was prepared in the same manner as in Example 1, except that ammonium polyphosphate was excluded in the preparation of the negative electrode.

**Comparative Example 2**

A lithium secondary battery was prepared in the same manner as in Example 1, except that resorcinol bis(diphenyl phosphate) was used as a flame-retardant material in the preparation of the negative electrode.

**Comparative Example 3**

A lithium secondary battery was prepared in the same manner as in Example 1, except that melamine polyphosphate was used as a flame-retardant material in the preparation of the negative electrode.

**Experimental Example.**

**Experimental Example 1: Stability Test**

A heat pad was placed on one surface of the cell (pouch type) of the lithium secondary batteries of Examples 1 and 2, and Comparative Examples 1 to 3, and the temperature of the heat pad was increased until the cell exploded. In this case, the explosion pressure was measured using autoclave equipment.

The reaction time is a value obtained from the test results of the autoclave equipment, and the reaction time is defined as a time (sec) from the pressure rise point ($TR_{initial}$) to the maximum pressure reaching point ($TR_{max}$) upon thermal runaway, as indicated by the following Formula 1.

$$[Formula\ 1]$$

$$Reaction\ time\ =\ TR_{max}\ -\ TR_{initial}$$

In addition, the TR rate is a value obtained by normalizing the cell explosion rate during thermal runaway to the cell capacity using the reaction time value derived from the above Formula 2, and this value (unit: mbar/(sec*mAh)) is also calculated as a test result of the autoclave equipment. The evaluation results are shown in Table 1 below.

**Experimental Example 2: Solubility Evaluation**

1 g of the flame-retardant material included in Examples 1 and 2 and Comparative Examples 1 to 3 was added to 100 cc of the electrolyte (propylene carbonate solvent), which was then kneaded for 30 minutes using a touch mixer, and then the solubility was evaluated by observing whether the flame-retardant material settled at 20°C. The evaluation results are shown in Table 1 below. For reference, the solubility was evaluated as 'X' (settlement) when it was less than 10 mg/cc, and as 'O' (dissolution) when it was 10 mg/cc or more.

**Experimental Example 3: Binding Force Evaluation**

The binding force was evaluated based on the electrode adhesion strength of Examples 1 and 2 and Comparative Examples 1 to 3. The binding force of the electrode slurry was evaluated by attaching an electrode plate to one side of a (double-sided) adhesive tape, attaching a 1 cm-thick glass to a back side of the adhesive tape, and then using a UTM (Instron 3345) to position the adhesive tape and the electrode plate at a 180° angle on the peeling surface. For reference, the binding force was evaluated as 'X' when it was 15 gf/20 mm or less, and as 'O' when it exceeded 15 gf/20 mm.

[Table 1]

| No. | Experimental Example 1: TR rate mbar/ (sec*mAh) | Experimental Example 2: Solubility (@20°C, mg/cc) | Experimental Example 3: Binding force test |
|---|---|---|---|
| Example 1 | 4.3 | X | O |
| Example 2 | 4.5 | X | O |
| Comparative Example 1 | 6.7 | - | O |
| Comparative Example 2 | 5.2 | O | O |
| Comparative Example 3 | 4.6 | X | X |

According to Table 1 above, the TR rates of Examples 1 and 2 and Comparative Example 3 were up to 4.6 mbar/(sec*mAh), which was lower than the TR rate values of Comparative Examples 1 and 2. These results suggest that the lithium secondary battery of the present invention has improved stability because the lithium secondary batteries of Examples 1 to 2 have lower cell explosion rates than Comparative Example 1, which did not include a flame-retardant material, and Comparative Example 2, which did not satisfy the solubility even though it included a flame-retardant material (resorcinol bis(diphenyl phosphate)), even though the lithium secondary batteries had the same capacity.

In addition, it was confirmed that Comparative Example 3 is unsuitable for use as electrode slurry because it included melamine polyphosphate as a flame-retardant material and had low solubility, but showed the electrode adhesion strength as low as 15 gf/20 mm or less. The results of Comparative Example 3 suggest that the binder was not uniformly dispersed during electrode coating, which resulted in insufficient adhesive strength (binding force) to properly prepare the electrode and cell. Accordingly, detachment may occur at the electrode edge portion during the future punching process, and it may be difficult to maintain structural integrity during cell operations due to electrode swelling.

**Experimental Example 4: Life Characteristics**

The life of the lithium secondary batteries of Examples 1 and 2 and Comparative Examples 1 to 3 was evaluated using an electrochemical charge/discharge tester, and the capacity retention rate was evaluated. The lithium secondary battery was subjected to an in-situ cycle test at 4.2-3.0 V 1C/0.5C, and during the test, 0.33C/0.33C charge/discharge (4.2-3.0 V) was performed every 50 cycles to calculate the capacity retention rate according to the following Formula 2. The evaluation results are shown in Table 2 below.

capacity retention rate (%) = { (discharge capacity at Nth cycle)/(discharge capacity at first cycle)} × 100%     [Formula 2]

[Table 2]

| No. | capacity retention rate after 200 cycles (%) |
|---|---|
| Example 1 | 82 |
| Example 2 | 80 |
| Comparative Example 1 | 84 |
| Comparative Example 2 | 67 |
| Comparative Example 3 | 77 |

According to Table 2 above, Examples 1 to 2 and Comparative Example 1 exhibited the capacity retention rate of 77% or more, suggesting that the lithium secondary battery using an electrode slurry including a flame-retardant material (Examples 1 to 2) has no difference in capacity retention rate from the lithium secondary battery using an electrode slurry not including a flame-retardant material.

However, Comparative Example 2, which did not satisfy the solubility criteria in a carbonate-based solvent even though an electrode slurry including a flame-retardant material was used, showed a capacity retention rate of 67% lower than those of the example group. The capacity retention rate of Comparative Example 2 is lower than that of Comparative Example 1, which does not include a flame-retardant material, suggesting that the solubility of the flame-retardant material in a carbonate-based solvent also affects the capacity retention rate on the battery.

In addition, Comparative Example 3, which included an aromatic polyphosphate compound (i.e., melamine polyphosphate), which exhibited a solubility of less than 10 mg/cc but is not a straight-chain type or branched-chain type, had the capacity retention rate of less than 80%, which was inferior to those of the example group. This suggests that detachment may occur at the electrode edge portion during future punching process, and the structural integrity of the electrode may be adversely affected by electrode swelling during cell operation, which is considered to have a negative impact on the cell life performance.

## Claims

1.  An electrode slurry comprising:

    an electrode active material;
    a conductive material;
    a binder;
    a solvent for forming a slurry; and
    a flame-retardant material,
    wherein the flame-retardant material has a solubility of less than 10 mg/cc in a carbonate-based solvent at 20°C and

    the flame-retardant material comprises a straight-chain type or branched-chain type polyphosphate-based compound.

2.  The electrode slurry of claim 1, wherein the straight-chain type or branched-chain type polyphosphate-based compound comprises at least one of ammonium and halogen.

3.  The electrode slurry of claim 1, wherein a content of the flame-retardant material is 1 part by weight or more and 20 parts by weight or less relative to 100 parts by weight of the entire electrode slurry.

4.  The electrode slurry of claim 1, wherein the conductive material is at least one of a planar conductive material, a linear conductive material, and a point-like conductive material.

5.  The electrode slurry of claim 1, wherein the binder is an aqueous binder or a non-aqueous binder.

6.  An electrode comprising:

    an electrode current collector layer; and
    an electrode active material layer having the electrode slurry of any one of claims 1 to 5 applied to one surface or both surfaces of the electrode current collector layer.

7.  A lithium secondary battery comprising:

    a first electrode;
    a second electrode;
    a separator interposed between the first electrode and the second electrode; and
    an electrolyte,
    wherein at least one of the first electrode and the second electrode is the electrode of claim 6.

8.  The lithium secondary battery of claim 7, wherein the electrolyte comprises a solvent; a salt; and an additive.

9.  The lithium secondary battery of claim 7, wherein the electrolyte comprises a carbonate-based solvent.

10. A battery pack comprising the lithium secondary battery of claim 7 as a unit cell.

[Figure 1]

[Figure 2]

[Figure 3]

[Figure 4]

[Figure 5]

## INTERNATIONAL SEARCH REPORT

| International application No. |
|---|
| **PCT/KR2024/021283** |

### A. CLASSIFICATION OF SUBJECT MATTER

**H01M 4/13**(2010.01)i; **H01M 4/62**(2006.01)i; **H01M 10/42**(2006.01)i; **H01M 10/052**(2010.01)i; **H01M 10/0569**(2010.01)i

According to International Patent Classification (IPC) or to both national classification and IPC

### B. FIELDS SEARCHED

Minimum documentation searched (classification system followed by classification symbols)

H01M 4/13(2010.01); H01M 10/42(2006.01); H01M 4/131(2010.01); H01M 4/133(2010.01); H01M 4/505(2010.01); H01M 4/525(2010.01); H01M 4/62(2006.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 전극 슬러리(electrode slurry), 난연 소재(flame-retardant material), 카보네이트계 용매(carbonate-based solvent), 용해도(solubility), 직쇄형 폴리포스페이트계 화합물(straight-chain polyphosphate-based compounds), 분쇄형 폴리포스페이트계 화합물 (branched polyphosphate-based compounds)

### C. DOCUMENTS CONSIDERED TO BE RELEVANT

| Category* | Citation of document, with indication, where appropriate, of the relevant passages | Relevant to claim No. |
|---|---|---|
| X | KR 10-2017-0091425 A (LG CHEM, LTD.) 09 August 2017 (2017-08-09)<br>See claims 1, 7-9 and 12-15; and paragraphs [0026], [0032], [0035]-[0039], [0043], [0044], [0053] and [0055]-[0060]. | 1-10 |
| A | KR 10-2021-0089097 A (SAMSUNG SDI CO., LTD.) 15 July 2021 (2021-07-15)<br>See abstract; claims 1-15; and paragraphs [0114]-[0116]. | 1-10 |
| A | CN 116565201 A (NINGDE CONTEMPORARY AMPEREX TECHNOLOGY CO., LTD.) 08 August 2023 (2023-08-08)<br>See abstract; and claims 1-15. | 1-10 |
| A | CN 115377417 A (TSINGHUA UNIVERSITY) 22 November 2022 (2022-11-22)<br>See abstract; and claims 1-10. | 1-10 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 April 2025** | **18 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/021283** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 113571692 A (HEFEI GUOXUAN HIGH-TECH POWER ENERGY CO., LTD.) 29 October 2021 (2021-10-29)<br>See abstract; and claims 1-11. | 1-10 |

**INTERNATIONAL SEARCH REPORT**
Information on patent family members

International application No.

**PCT/KR2024/021283**

| Patent document cited in search report | | | Publication date (day/month/year) | Patent family member(s) | | | Publication date (day/month/year) |
|---|---|---|---|---|---|---|---|
| KR | 10-2017-0091425 | A | 09 August 2017 | KR | 10-2142627 | B1 | 07 August 2020 |
| KR | 10-2021-0089097 | A | 15 July 2021 | US | 2023-0051902 | A1 | 16 February 2023 |
| | | | | WO | 2021-141391 | A1 | 15 July 2021 |
| CN | 116565201 | A | 08 August 2023 | None | | | |
| CN | 115377417 | A | 22 November 2022 | None | | | |
| CN | 113571692 | A | 29 October 2021 | CN | 113571692 | B | 12 July 2022 |

Form PCT/ISA/210 (patent family annex) (July 2022)

**REFERENCES CITED IN THE DESCRIPTION**

**Patent documents cited in the description**

- KR 1020230194499
- KR 1020240197948